# EUROPÄISCHE PATENTSCHRIFT

(11) **EP 2 401 183 B1**
(45) Veröffentlichungstag und Bekanntmachung des Hinweises auf die Patenterteilung: **18.12.2019**
(21) Anmeldenummer: 09796750.9
(22) Anmeldetag: 28.12.2009
(51) Int. Cl.: B60T 13/74, F16H 1/22, F16H 19/00, F16H 35/02

(54) **ELEKTROMECHANISCHER BREMSKRAFTVERSTÄRKER**
ELEKTROMECHANICAL BRAKE BOOSTER
SERVOFREIN ÉLÉCTROMÉCHANIQUE

(30) Priorität: 25.02.2009 DE 102009001142
(43) Veröffentlichungstag der Anmeldung: 04.01.2012
(60) Teilanmeldung: 19203577.2
(73) Patentinhaber: Robert Bosch GmbH, 70442 Stuttgart (DE)
(72) Erfinder: VOLLERT, Herbert, 71665 Vaihingen/Enz (DE); GARNIER, Remy, Remseck 71686 (DE); WEIBERLE, Reinhard, 71665 Vaihingen/Enz (DE); JAHNZ, Timo, 74354 Besigheim (DE); KOLARSKY, Jens, 74321 Bietigheim/Bissingen (DE); HOENLE, Stephan, 70825 Korntal-Muenchingen (DE)
(86) Internationale Anmeldenummer: PCT/EP2009/067937
(87) Internationale Veröffentlichungsnummer: WO 2010/097135

(56) Entgegenhaltungen:
- EP-A2- 0 395 262
- DE-A1- 3 031 643
- DE-A1- 10 312 207
- DE-A1- 10 327 553
- DE-A1-102007 018 469

## Beschreibung

### Stand der Technik

Die Erfindung betrifft einen elektromechanischen Bremskraftverstärker mit den Merkmalen des Oberbegriffs des Anspruchs 1.

Die Offenlegungsschrift DE 103 27 553 A1 offenbart einen elektromechanischen Bremskraftverstärker mit einem Hohlwellen-Elektromotor, dessen hohler Rotor eine Spindelmutter aufweist, die mit einer hohlen Spindel in Eingriff steht. Die Spindelmutter und die Spindel bilden einen Spindeltrieb oder allgemein ein Schraubgetriebe, das eine rotatorische Antriebsbewegung des Elektromotors in eine translatorische Abtriebsbewegung zur Betätigung eines hydraulischen Hauptbremszylinders umsetzt. Der Spindeltrieb des bekannten elektromechanischen Bremskraftverstärkers bildet also ein Rotations-/Translations-Umsetzungsgetriebe. Die translatorische Abtriebsbewegung der Hohlspindel wird auf einen Mitnehmer übertragen, der fest auf einer Kolbenstange des Bremskraftverstärkers angeordnet ist. Die Kolbenstange ist gelenkig mit einem Bremspedal verbunden und wird zu einer Bremsbetätigung über das Bremspedal mit einer Muskelkraft eines Fahrzeugführers beaufschlagt. Die Kolbenstange steht mit einem Kolben des Hauptbremszylinders in Verbindung, sie überträgt die Muskelkraft und die Verstärkerkraft des Bremskraftverstärkers auf den Kolben des Hauptbremszylinders. In üblicher Terminologie bildet die Kolbenstange des bekannten Bremskraftverstärkers zugleich auch dessen Druckstange.

Einen weiteren elektromechanischen Bremskraftverstärker offenbart die Offenlegungsschrift DE 30 31 643 A1. Dieser Bremskraftverstärker weist ebenfalls einen Elektromotor auf, der über ein Schneckengetriebe eine Lamellenkupplung antreibt. Über die Lamellenkupplung wird die rotatorische Antriebsbewegung des Elektromotors eingekoppelt. Das vom Elektromotor über das nachgeschaltete Schneckengetriebe eingekoppelte Moment hängt von einer Axialbeaufschlagung der Lamellenkupplung durch eine Muskelkraft ab, die zu einer Bremsbetätigung von einem Fahrzeugführer ausgeübt wird.

### Offenbarung der Erfindung

Der erfindungsgemäße elektromechanische Bremskraftverstärker mit den Merkmalen des Anspruchs 1 weist einen Elektromotor und ein Getriebe auf, das vom Elektromotor angetrieben wird. Das Getriebe weist ein Rotations-/Translations-Umsetzungsgetriebe auf, das eine rotatorische Antriebsbewegung des Elektromotors in eine translatorische Abtriebsbewegung zur Betätigung eines hydraulischen Hauptbremszylinders umsetzt. Als Rotations-/Translations-Umsetzungsgetriebe kommen beispielsweise ein Zahnstangengetriebe, ein Schraubgetriebe wie ein Spindeltrieb, ein Kugelumlaufgetriebe, ein Rollengewindetrieb, auch in Form eines Planetenrollen-Gewindetriebs, oder ein Zugmittelgetriebe in Betracht. Die Aufzählung ist nicht abschließend. Der Antrieb bzw. Eingang des Rotations-/Translations-Umsetzungsgetriebes muss nicht zwingend auch der Antrieb bzw. Eingang des Getriebes insgesamt sein, dem Rotations-/Translations-Umsetzungsgetriebe kann ein weiteres Getriebe oder eine Getriebestufe vorgeschaltet sein. Entsprechendes gilt für den Abtrieb bzw. Ausgang des Rotations-/Translations-Umsetzungsgetriebes, der nicht zwingend der Ausgang bzw. Abtrieb des Getriebes insgesamt sein muss. Dem Rotations-/Translations-Umsetzungsgetriebe kann ein weiteres Getriebe oder eine Getriebestufe nachgeschaltet sein.

Das Getriebe des erfindungsgemäßen elektromechanischen Bremskraftverstärkers weist ein Verteilergetriebe und ein Vereinigungsgetriebe auf. Das Verteilergetriebe und/oder das Vereinigungsgetriebe können Teile des Rotations-/Translations-Umsetzungsgetriebes umfassen. Das Verteilergetriebe verteilt einen Getriebeeingang auf mindestens zwei Getriebepfade, das Vereinigunsgetriebe vereinigt die Getriebepfade wieder auf einen gemeinsamen Getriebeausgang. Wie zum Rotations-/Translations-Umsetzungsgetriebe erläutert, muss der Getriebeeingang des Verteilergetriebes nicht der Getriebeeingang des Getriebes des Bremskraftverstärkers sein, sondern es kann dem Verteilergetriebe ein Getriebe oder eine Getriebestufe vorgeschaltet sein. Ebenso muss der Getriebeausgang des Vereinigungsgetriebes nicht der Ausgang des Getriebes insgesamt sein, sondern es kann dem Vereinigungsgetriebe ein weiteres Getriebe oder eine Getriebestufe nachgeschaltet sein. Die Getriebe können in jedem Getriebepfad vorhanden sein, wobei vorzugsweise jeder Getriebepfad gleiche Getriebe aufweist, was allerdings nicht zwingend ist. Die Getriebe können das Vereinigungsgetriebe bilden.

Ein Vorteil der Erfindung ist die Verteilung der Last des Getriebes, also eines vom Getriebe übertragenen Moments und/oder einer vom Getriebe übertragenen Kraft auf mindestens zwei Getriebepfade. Die Belastung der Getriebepfade ist dadurch verringert, was beispielsweise die Herstellung von Teilen des Getriebes aus Kunststoff anstatt aus Stahl ermöglicht. Ein weiterer Vorteil der Erfindung ist die Möglichkeit einer symmetrischen Ausbildung und einer symmetrischen Einleitung der translatorischen Abtriebsbewegung auf ein Ausgangsglied des Bremskraftverstärkers.

Die Unteransprüche haben vorteilhafte Ausgestaltungen und Weiterbildungen der im Anspruch 1 angegebenen Erfindung zum Gegenstand.

Anspruch 1 sieht eine mehrstufige Ausbildung des Getriebes vor, beispielsweise ist dem Rotations-/Translations-Umsetzungsgetriebe ein Untersetzungsgetriebe vorgeschaltet. Als Untersetzungsgetriebe kommen ein Schneckengetriebe, ein ggf. auch mehrstufiges Stirnradgetriebe, ein Planetengetriebe, ein Kegelradgetriebe oder ein Kronenradgetriebe in Betracht. Die Aufzählung ist nicht abschließend. Die Getriebe können das Verteilergetriebe bilden und/oder in jedem Getriebepfad vorhanden sein. Auch für eine mehrstufige Getriebeausbildung gilt, dass vorzugsweise jeder Getriebepfad gleiche Getriebe aufweist, was allerdings nicht zwingend für die Erfindung ist.

Anspruch 4 sieht ein Getriebe mit einer sich ändernden Übersetzung vor. Insbesondere verkleinert sich die Übersetzung bzw. vergrößert sich eine Untersetzung mit zunehmender Verschiebung eines Ausgangsglieds des Bremskraftverstärkers. Bei gleichem Antriebsmoment des Elektromotors wird die vom Bremskraftverstärker ausgeübte Verstärkerkraft größer, wogegen zu Beginn einer Bremsbetätigung eine Verschiebegeschwindigkeit des Ausgangsglieds des Bremskraftverstärkers bei gegebener Drehzahl des Elektromotors größer ist. Als Getriebe mit sich ändernder Übersetzung sind Kurvengetriebe, auch solche mit einer Zylinderkurve, bekannt. Zu Kurvengetrieben zählen auch Nockengetriebe mit einem drehend oder insbesondere schwenkend antreibbaren Nocken. Auch diese Aufzählung ist nicht abschließend. Gerade für Getriebe mit sich ändernder Übersetzung kann die Aufteilung auf mehrere solche Getriebe in mehreren Getriebepfaden von Vorteil sein, um die Belastung der einzelnen Getriebe zu verringern.

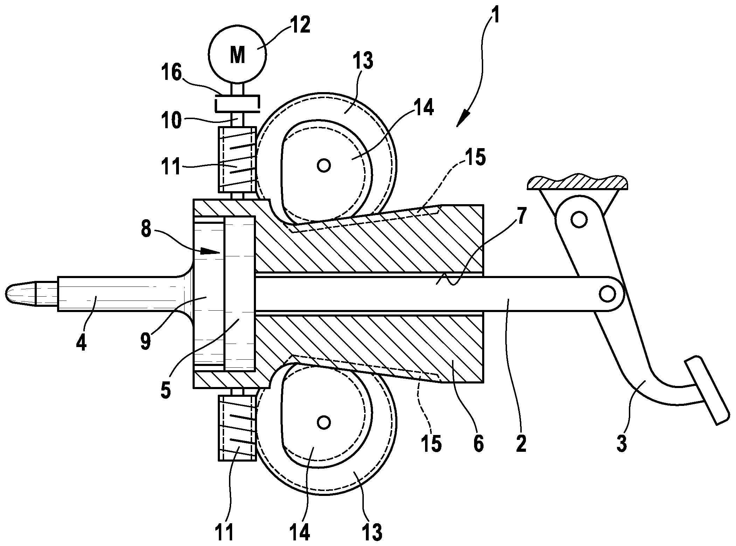

### Kurze Beschreibung der Zeichnung

Die Erfindung wird nachfolgend anhand eines in der Zeichnung dargestellten Ausführungsbeispiels näher erläutert. Die einzige Figur zeigt eine schematisierte und vereinfachte Achsschnittdarstellung eines erfindungsgemäßen elektromechanischen Bremskraftverstärkers.

### Ausführungsform der Erfindung

Der in der Zeichnung dargestellte erfindungsgemäße elektromechanische Bremskraftverstärker 1 weist eine Kolbenstange 2, die gelenkig mit einem Bremspedal 3 verbunden ist, welches nicht Teil des Bremskraftverstärkers 1 ist, und eine Druckstange 4 auf. Mit der Druckstange 4 ist in an sich bekannter Weise ein nicht dargestellter hydraulischer Hauptbremszylinder betätigbar, d. h. ein Kolben ist in den Hauptbremszylinder hinein verschiebbar. Zwischen der Kolbenstange 2 und der Druckstange 4 ist eine sog. Reaktionsscheibe 5 angeordnet, über die eine Druckkraft von der Kolbenstange 2 auf die Druckstange 4 übertragen wird. Durch Niedertreten des Bremspedals 3 ist über die Kolbenstange 2, die Reaktionsscheibe 5 und die Druckstange 4 der Kolben des nicht dargestellten Hauptbremszylinders in den Hauptbremszylinder hinein verschiebbar, d. h. der Hauptbremszylinder ist in geschilderter Weise mit Muskelkraft betätigbar. Die Reaktionsscheibe 5 besteht aus Gummi oder einem gummielastischen Kunststoff.

Der Bremskraftverstärker 1 weist einen Verstärkerkörper 6 mit einem koaxialen Durchgangsloch 7 auf, in dem die Kolbenstange 2 axial verschieblich aufgenommen ist. Der Verstärkerkörper 6 ist ebenfalls axial verschieblich, er verjüngt sich an seiner Außenseite kegelstumpfförmig in Richtung der Druckstange 4 und weitet sich an seinem druckstangenseitigen Ende zu einem Fußdurchmesser des Kegelstumpfs auf. Im druckstangenseitigen Ende weist der Verstärkerkörper 6 eine zylindrische Ansenkung 8 auf, in deren Grund das Durchgangsloch 7 mündet und in der die Reaktionsscheibe 5 einliegt und im Anschluss ein plattenförmiger Fuß 9 der Druckstange 4 aufgenommen ist.

Quer zum Verstärkerkörper 6 ist eine Schneckenwelle 10 angeordnet, die zwei starr mit ihr verbundene oder mit ihr einstückige Schnecken 11 aufweist, die sich symmetrisch beiderseits des Verstärkerkörpers 6 befinden. Antreibbar ist die Schneckenwelle 10 mit einem Elektromotor 12. Die beiden Schnecken 11 weisen gleich große, einander entgegen gesetzte Steigungen auf. Sie kämmen mit Schneckenrädern 13 und bilden mit diesen Schneckengetriebe 11, 13. Durch die entgegen gesetzten Steigungen der Schnecken 11 und damit durch die Gegenläufigkeit der beiden Schneckengetriebe 11, 13 gleichen sich Axialkräfte der beiden Schnecken 11 beim Antrieb der Schneckenräder 13 aus, so dass die Schneckenwelle 10 axialkraftfrei ist. Eine Kupplung 16 verbindet die Schneckenwelle 10 drehfest und axialbeweglich mit einer Motorwelle des Elektromotors 12. Durch eine Axialverschieblichkeit gleicht die Schneckenwelle 10 etwaige Toleranzen in den Getriebpfaden aus, die Getriebepfade werden gleich belastet.

Die Schneckenräder 13 sind drehfest mit Stirnrädern 14, die einander gegenüberliegend beiderseits des Verstärkerkörpers 6 angeordnet sind. Die Stirnräder 14 kämmen mit Zahnstangen 15 des Verstärkerkörpers 6, die in Längsrichtung des Verstärkerkörpers 6 in dessen kegelstumpfförmigem Bereich verlaufen. Ein Abstand der beiden Zahnstangen 15 voneinander verkleinert sich in Richtung der Druckstange 4. Die Stirnräder 14 weisen einen konstanten Achsabstand voneinander und vom Verstärkerkörper 6 auf, sie sind exzentrisch, so dass sie den zur Achs- und Verschieberichtung des Verstärkerkörpers 6 schrägen Verlauf der Zahnstangen 15 ausgleichen. Die Stirnräder 14 und die Zahnstangen 15 bilden Zahnstangengetriebe 14, 15, die auf Grund der Exzentrizität der Stirnräder 14 und der zur Verschieberichtung schrägen Anordnung der Zahnstangen 15 sich ändernde Übersetzungen aufweisen. Die Übersetzung der Zahnstangengetriebe 14, 15 wird bei einer Verschiebung des Verstärkerkörpers 6 in Richtung der Druckstange 4, also bei einer Betätigung des nicht dargestellten Hauptbremszylinders, kleiner; bei einer Verschiebung des Verstärkerkörpers 6 in Betätigungsrichtung des Hauptbremszylinders nimmt bei angenommener konstanter Drehzahl des Elektromotors 12 eine Verschiebegeschwindigkeit des Verstärkerkörpers 6 ab und bei angenommenem konstantem Antriebsmoment des Elektromotors 12 eine Verstärkerkraft des Bremskraftverstärkers 1 zu. Ein gerader Verlauf der Zahnstangen 15 ist nicht zwingend für die Erfindung, abweichend von der dargestellten Ausführungsform können die Zahnstangen 15 einen an sich beliebigen, kurvenförmigen Verlauf aufweisen, insbesondere können sie konvex oder konkav gerundet sein. Die Form der Stirnräder 14 muss an den Verlauf der Zahnstangen 15 angepasst sein, so dass die Verzahnungen immer kämmen. Denkbar ist auch ein veränderlicher Achsabstand der Stirnräder 14 voneinander und vom Verstärkerkörper 6. Auch sind Zahnstangen 15 mit zur Verschieberichtung parallelem Verlauf und konzentrische Stirnräder 14 möglich, in diesem Fall weisen die Zahnstangengetriebe eine konstante Übersetzung auf (nicht dargestellt). Die Stirnräder 14 weisen eine Verzahnung nur in dem Umfangsbereich auf, der bei ihrer Drehung oder Verschwenkung mit den Zahnstangen 15 kämmt bzw. in Eingriff kommt.

Die Verstärkerkraft des Bremskraftverstärkers 1 wird vom Grund der Ansenkung 8 des Verstärkerkörpers 6 über die Reaktionsscheibe 5 auf den Fuß 9 der Druckstange 4 übertragen. Die Reaktionsscheibe 5 addiert die über das Bremspedal 3 auf die Kolbenstange 2 ausgeübte Muskelkraft und die vom Verstärkerkörper 6 des Bremskraftverstärkers 1 ausgeübte Verstärkerkraft und überträgt die Kräfte gemeinsam als Betätigungskraft auf den Fuß 9 der Druckstange 4.
Die beiden Schneckengetriebe 11, 13 bilden ein Verteilergetriebe, das einen Getriebeeingang auf zwei Getriebepfade verteilt. Getriebeeingang ist hier die Schneckenwelle 10 bzw. das Antriebsmoment des Elektromotors 12. Die beiden Getriebepfade umfassen jeweils ein Schneckengetriebe 11, 13 und ein Zahnstangengetriebe 14, 15. Die beiden Zahnstangengetriebe 14, 15 bilden mit dem Verstärkerkörper 6 ein Vereinigungsgetriebe, das die Momente der beiden Getriebepfade als axial wirkende Verstärkerkraft auf einen Getriebeausgang, nämlich den Verstärkerkörper 6, vereinigt. Durch den symmetrischen Aufbau und die symmetrische Anordnung beider Getriebepfade übertragen beide Getriebepfade die gleiche Last, also gleich große Momente oder Kräfte und der Getriebeausgang, nämlich der Verstärkerkörper 6 ist symmetrisch beaufschlagt: auf den Verstärkerkörper 6 wirken weder ein Moment noch eine Querkraft. Insgesamt bilden die beiden Schneckengetriebe 11, 13 und die beiden Zahnstangengetriebe 14, 15 bilden ein Getriebe des Bremskraftverstärkers 1.

Die beiden Getriebepfade sind mehr-, nämlich zweistufig. Die Schneckengetriebe 11, 13 bilden eine erste Getriebestufe und die Zahnstangengetriebe 14, 15 eine zweite Getriebestufe der Getriebepfade. Die Schneckengetriebe 11, 13 sind Untersetzungsgetriebe, sie wandeln eine rotatorische Antriebsbewegung in eine rotatorische Abtriebsbewegung. Die Zahnstangengetriebe 14, 15 sind Rotations-/Translations-Umsetzungsgetriebe, die eine rotatorische Antriebsbewegung in eine translatorische Abtriebsbewegung wandeln. Wie bereits gesagt, weisen die Zahnstangengetriebe 14, 15 eine sich ändernde Übersetzung auf. Durch die Verteilung der Last auf zwei Getriebepfade ist eine Herstellung der Schneckenräder 13 aus Kunststoff möglich.

## Patentansprüche

1. Elektromechanischer Bremskraftverstärker, der eine Muskelkraft eines Fahrzeugführers und eine Verstärkerkraft des Bremskraftverstärkers (1) als Betätigungskraft auf einen Kolben eines Hauptbremszylinders überträgt, mit einem Elektromotor (12) und einem Getriebe (11, 13, 14, 15), das vom Elektromotor (12) angetrieben wird und das ein Rotations-/Translations-Umsetzungsgetriebe (14, 15) aufweist, das eine rotatorische Antriebsbewegung des Elektromotors (12) in eine translatorische Abtriebsbewegung zur Betätigung eines hydraulischen Hauptbremszylinders umsetzt, **dadurch gekennzeichnet, dass** das Getriebe (11, 13, 14, 15) ein mehrstufiges Verteilergetriebe (11, 13), das einen Getriebeeingang (10) auf mindestens zwei Getriebepfade verteilt, und ein Vereinigungsgetriebe (14, 15), das die Getriebepfade auf einen Getriebeausgang (6) vereinigt, aufweist.

2. Elektromechanischer Bremskraftverstärker nach Anspruch 1, **dadurch gekennzeichnet, dass** die Getriebepfade eine gleiche Last übertragen.

3. Elektromechanischer Bremskraftverstärker nach Anspruch 1, **dadurch gekennzeichnet, dass** das Vereinigungsgetriebe (14, 15) den Getriebeausgang (6) symmetrisch beaufschlagt.

4. Elektromechanischer Bremskraftverstärker nach Anspruch 1, **dadurch gekennzeichnet, dass** das Getriebe (11, 13, 14, 15) eine sich ändernde Übersetzung aufweist.

5. Elektromechanischer Bremskraftverstärker nach Anspruch 1, **dadurch gekennzeichnet, dass** das Verteilergetriebe (11, 13) zwei Schneckengetriebe (11, 13) mit einem gemeinsamen Schneckenantrieb (10) aufweist, wobei die Schneckengetriebe (11, 13) Teile zweier Getriebepfade sind.

6. Elektromechanischer Bremskraftverstärker nach Anspruch 5, **dadurch gekennzeichnet, dass** die Schneckengetriebe (11, 13) gegenläufig sind.

7. Elektromechanischer Bremskraftverstärker nach Anspruch 1, **dadurch gekennzeichnet, dass** das Vereinigungsgetriebe (14, 15) zwei Zahnradgetriebe (14, 15) aufweist, deren Zahnstangen (15) einen gemeinsamen Getriebeausgang bilden.

## Claims

1. Electromechanical brake booster which transmits a muscle force of a vehicle driver and a booster force of the brake booster (1) as an activation force to a piston of a master brake cylinder, having an electric motor (12) and a gear mechanism (11, 13, 14, 15) which is driven by the electric motor (12) and which has a rotational/translational conversion gear mechanism (14, 15) which converts a rotational drive movement of the electric motor (12) into a translational output movement in order to activate a hydraulic master brake cylinder, **characterized in that** the gear mechanism (11, 13, 14, 15) has a multistage distributor gear mechanism (11, 13) which distributes a gear mechanism input (10) between at least two gear mechanism paths, and a combination gear mechanism (14, 15) which combines the gear mechanism paths into one gear mechanism output (6).

2. Electromechanical brake booster according to Claim 1, **characterized in that** the gear mechanism paths transmit the same load.

3. Electromechanical brake booster according to Claim 1, **characterized in that** the combination gear mechanism (14, 15) acts on the gear mechanism output (6) symmetrically.

4. Electromechanical brake booster according to Claim 1, **characterized in that** the gear mechanism (11, 13, 14, 15) has a changing transmission ratio.

5. Electromechanical brake booster according to Claim 1, **characterized in that** the distributor gear mechanism (11, 13) has two worm gear mechanisms (11, 13) with a common worm drive (10), wherein the worm gear mechanisms (11, 13) are parts of two gear mechanism paths.

6. Electromechanical brake booster according to Claim 5, **characterized in that** the worm gears (11, 13) run in opposite directions.

7. Electromechanical brake booster according to Claim 1, **characterized in that** the combination gear mechanism (14, 15) has two toothed gear mechanisms (14, 15) whose toothed racks (15) form a common gear mechanism output.

## Revendications

1. Servofrein électromécanique, qui transfère une force musculaire d'un conducteur de véhicule et une force d'amplification du servofrein (1) en tant que force d'actionnement à un piston d'un maître-cylindre de frein, comprenant un moteur électrique (12) et une transmission (11, 13, 14, 15) qui est entraînée par le moteur électrique (12) et qui présente une transmission de conversion de rotation/translation (14, 15), qui convertit un mouvement d'entraînement rotatif du moteur électrique (12) en un mouvement de prise de force de translation pour l'actionnement d'un maître-cylindre de frein hydraulique, **caractérisé en ce que** la transmission (11, 13, 14, 15) présente un boîtier de transfert (11, 13) en plusieurs étages qui divise une entrée de transmission (10) en au moins deux chemins de transmission, et une transmission de combinaison (14, 15) qui combine les chemins de transmission en une sortie de transmission (6).

2. Servofrein électromécanique selon la revendication 1, **caractérisé en ce que** les chemins de transmission transmettent une charge identique.

3. Servofrein électromécanique selon la revendication 1, **caractérisé en ce que** la transmission de combinaison (14, 15) sollicite de manière symétrique la sortie de transmission (6).

4. Servofrein électromécanique selon la revendication 1, **caractérisé en ce que** la transmission (11, 13, 14, 15) présente une démultiplication variable.

5. Servofrein électromécanique selon la revendication 1, **caractérisé en ce que** le boîtier de transfert (11, 13) présente deux transmission à vis sans fin (11, 13) avec un entraînement à vis sans fin commun (10), les transmission à vis sans fin (11, 13) faisant partie des deux chemins de transmission.

6. Servofrein électromécanique selon la revendication 5, **caractérisé en ce que** les transmissions à vis sans fin (11, 13) fonctionnent en sens inverse.

7. Servofrein électromécanique selon la revendication 1, **caractérisé en ce que** la transmission de combinaison (14, 15) présente deux transmissions à roue dentée (14, 15) dont les crémaillères (15) forment une sortie de transmission commune.
